# FASCICULE DE BREVET EUROPEEN

(11) **EP 0 650 122 B1**
(45) Date de publication et mention de la délivrance du brevet: **25.03.1998**
(21) Numéro de dépôt: 94402351.4
(22) Date de dépôt: 19.10.1994
(51) Int. Cl.: G06F 11/14

(54) **Dispositif et procédé de sauvegarde à distance de données numériques**
Fernsicherungseinrichtung und Verfahren für numerische Daten
Remote back-up device and method for numerical data

(30) Priorité: 21.10.1993 FR 9312771
(43) Date de publication de la demande: 26.04.1995
(73) Titulaire: Rouze, Gérard, F-34660 Coumonsec (FR); FRANCE TELECOM, 92131 ISSY LES MOULINEAUX (FR); Ferrand, Christian, F-34000 Montpellier (FR)
(72) Inventeur: Rouze, Gérard, F- 34660 Coumonsec (FR); Ferrand, Christian, F-34000 Montpellier (FR)
(74) Mandataire: Ravina, Bernard

(56) Documents cités:
- US-A- 5 133 065
- W & S WIRTSCHAFTSSCHUTZ & SICHERHEITSTECHNIK, Mars 1993 pages 164 - 167 W. FRIEDRICH 'Sicherheit in einer Backup-Umgebung'
- DATA COMMUNICATIONS, vol.21, no.18, Décembre 1992, NEW YORK US pages 45 - 46 S. SALAMONE 'A magic bullet for netware viruses'

## Description

La présente invention concerne un dispositif et un procédé de sauvegarde à distance d'informations numériques. L'information est devenue une partie intégrante du patrimoine d'une entreprise ou d'un service public. Cette information est, par ailleurs, de plus en plus dispersée par l'utilisation de très nombreux systèmes informatiques, particulièrement minis et micro-ordinateurs. Il est donc devenu indispensable de sauvegarder cette information contre les destructions accidentelles ou malveillantes. Certaines professions ont, par ailleurs, l'obligation déontologique de maintenir des informations confidentielles.

Les dispositifs de sauvegarde d'informations connus à ce jour, de type a disquettes informatiques sur lesquelles l'utilisateur copie ses fichiers informatiques ne présentent que peu de sécurité vis a vis de l'espionnage puisque les disquettes sont généralement utilisables sur de nombreux systèmes informatiques. De plus, cette sauvegarde est encombrante à cause du nombre des disquettes nécessaires et très fastidieuse pour l'utilisateur. A cause de ces défauts, ce moyen de sauvegarde est rarement bien appliqué.

D'autres dispositifs, à enregistrement sur bande magnétique, sur disques magnéto-optiques ou optiques, sont onéreux et n'améliorent pas ladite sécurité ni la facilité d'emploi.
De plus, ces deux types de sauvegarde rendent les informations peu disponibles pour un utilisateur en déplacement et peu confidentielles. Enfin, la délocalisation de l'information, qui est une nécessité pour la sécurité des données numériques est très complexe à mettre en oeuvre.

Le dispositif objet de la présente invention entend remédier à ces inconvénients en présentant un ensemble de moyens adaptés à tous les systèmes informatiques et garantissant une parfaite sécurité, une parfaite disponibilité, une parfaite intégrité et une parfaite confidentialité de la sauvegarde informatique.

Il s'intègre dans les systèmes informatiques existants. Il comporte deux ensembles de moyens, l'un étant diffusé en autant d'exemplaires que de machines ou de sites protégés et l'autre étant unique ou limité à quelques exemplaires.

Le dispositif comporte donc un premier ensemble électronique permettant le raccordement d'un système informatique à un réseau de transmission et un centre de sauvegarde comportant un second ensemble électronique et informatique, lui-même relié au réseau de transmission.

Le dispositif objet de la présente invention est ainsi un dispositif de sauvegarde à distance de données numériques organisées en fichiers contenus dans une mémoire de masse locale d'un système informatique caractérisé en ce qu'il comporte, pour chaque site donnant lieu à sauvegarde, un circuit électronique relié au dit système informatique comportant un moyen de lecture de données numériques dans la dite mémoire de masse, un moyen de reconnaissance de fichiers modifiés depuis la précédente sauvegarde adaptée à sélectionner les fichiers qui ont été modifiés depuis la précédente sauvegarde, un moyen de détection de virus informatiques adapté à détecter les virus informatiques dans lesdites données, un moyen de chiffrement des données, un moyen de compression des données chiffrées et un moyen local de transmission des données chiffrées et compressées sur un réseau numérique à intégration de services et en ce qu'il comporte, relié audit réseau, un moyen de traitement de données transmises associé à des mémoires de masse globales conservant les données transmises et à un moyen de numérotation automatique, ledit moyen de traitement de données commandant le fonctionnement du moyen de numérotation automatique, le fonctionnement du circuit électronique et le fonctionnement des mémoires de masse globales.
Le procédé objet de la présente invention est un procédé de sauvegarde à distance de données numériques organisées en fichiers contenus dans une mémoire de masse d'un système informatique relié a un réseau numérique à intégration de services caractérisé en ce qu'il réalise automatiquement une numérotation sur ledit réseau, une lecture de données numérique dans la dite mémoire de masse, une reconnaissance de fichiers modifiés depuis la précédente sauvegarde adaptée à sélectionner les fichiers qui ont été modifiés depuis la précédente sauvegarde, une détection de virus informatiques adaptée à détecter les virus informatiques dans lesdites données, un chiffrement des données, une compression des données chiffrées, une transmission des données chiffrées et comprimées sur un réseau numérique à intégration de services, un traitement des données transmises, un archivage des données transmises.

La description qui va suivre, faite en regard des dessins annexés dans un but explicatif et nullement limitatif permet de mieux comprendre les avantages, buts et caractéristiques de l'invention.

Dans la figure 1 est représenté un schéma bloc du dispositif objet de la présente invention inséré dans un système informatique et un réseau de communication existants.

Dans la figure 2 est représenté un schéma bloc d'un circuit électronique incorporé dans le dispositif présenté en figure 1.

Dans la figure 3 est représenté un schéma bloc d'un moyen d'archivage d'informations incorporé au dispositif représenté en figure 1.

Dans la figure 4 est représentée un séquencement d'opérations de fonctionnement du dispositif présenté en figure 1.

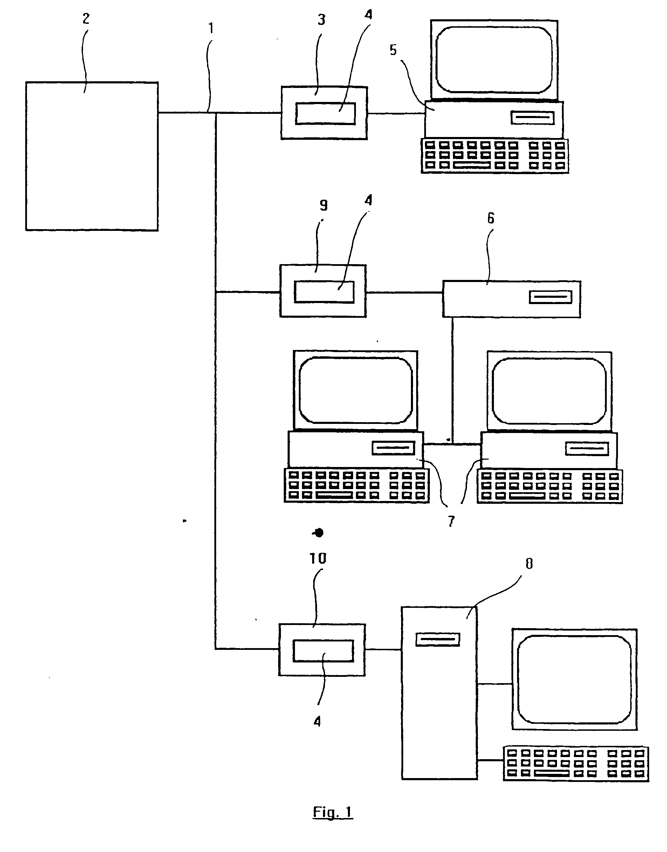

Dans la figure 1 sont représentés un réseau de communication 1, un moyen d'archivage 2, trois boîtiers électroniques 3, 9 et 10 comportant trois circuits électroniques 4, un micro-ordinateur 5, un serveur de réseau local 6, deux terminaux de réseau local 7, un mini-ordinateur 8 et un moyen d'archivage 2.

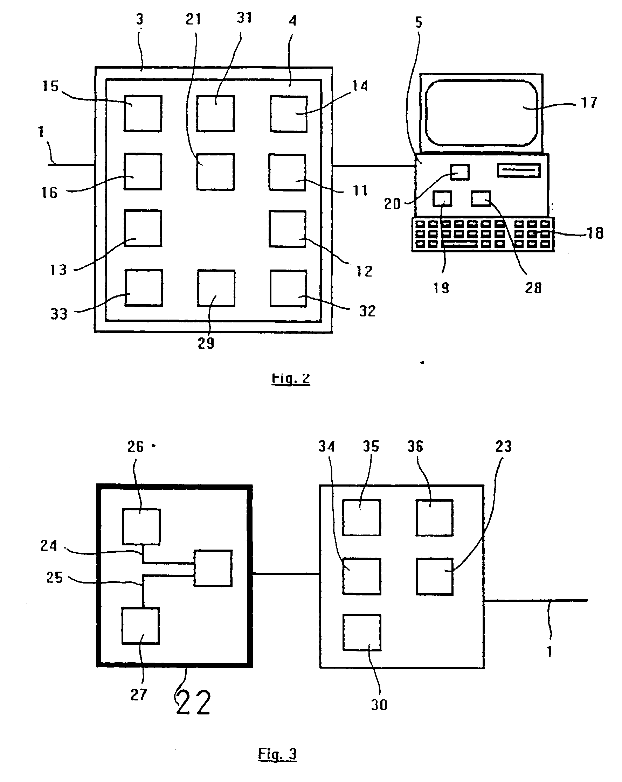

Le réseau de communication 1 est de type numérique et est adapté à transmettre à distance des informations numériques. Il est préférentiellement à haut débit d'informations, à intégration de services, utilisant un système de signalisation par canal sémaphore de type du Comité Consultatif International Télégraphique et Téléphonique, CCITT nx7. Le moyen d'archivage 2 est adapté à recevoir, à traiter, à conserver et à transmettre les informations qui lui sont transmises par le réseau de communication 1. Il est présenté en regard de la figure 3. Les trois boitiers électroniques 3, 9 et 10 sont présentés en regard de la figure 2. Ils sont mécaniquement protégés contre toute ouverture et possèdent un moyen de détection d'ouverture adapté à émettre ou à modifier un signal en cas d'ouverture et un moyen de mémorisation d'ouverture adapté à mémoriser le signal d'ouverture. Ils comportent chacun un circuit électronique 4. Le boitier électronique 3 est relié électriquement d'une part au réseau de communication 1 et d'autre part au micro-ordinateur 5. Le micro-ordinateur 5 est de type connu et est présenté en figure 2. Le boitier électronique 9 est relié électriquement d'une part au réseau de communication 1 et d'autre part au serveur de réseau local 6. Le serveur de réseau local 6 est de type connu et est relié aux deux terminaux de réseau local 7. Le micro-ordinateur 5, le serveur de réseau local 6 associé aux deux terminaux 7 et le mini-ordinateur 8 sont appelés indifféremment dans le texte "systèmes informatiques". Les données numériques sont organisées en fichiers contenues dans une mémoire de masse des systèmes informatiques. Le boîtier électronique 10 est relié électriquement d'une part au réseau de communication 1 et d'autre part au mini-ordinateur 8. Le mini-ordinateur 8 est de type quelconque.

Chacun des circuits electroniques 4 permet la transmission automatique de données cryptées depuis les mémoires de masse du système informatique auquel il est relié vers le moyen d'archivage 2, à travers le réseau de communication 1.

Dans la figure 2 sont représentés le réseau de communication 1, le micro-ordinateur 5 comportant un moniteur 17, un clavier 18, une mémoire de masse locale 19, une horloge 28 et une unité centrale 20, le boîtier électronique 3, le circuit électronique 4 comportant un moyen de lecture de données 11, un moyen de mémorisation 21, un moyen de reconnaissance de données modifiées 12 depuis la précédente sauvegarde, un moyen de détection de virus informatique 13, un moyen de décontamination 32, un moyen d'identification 14, un moyen de chiffrement des données 15, un moyen de compression de données 31, un moyen local de transmission sur un réseau 16, un moyen de modification d'attributs 29 et moyen d'émission de compte-rendu 33.

Le moniteur 17 est de type connu, notamment en informatique individuelle. Le clavier 18 est de type connu, en particulier en bureautique. La mémoire de masse locale 19 est adaptée à conserver des programmes et des fichiers, par exemple de texte, de tableau, de graphiques, de sons ou d'images. Ces informations sont introduites dans cette mémoire par l'unité centrale 20 en provenance, soit d'une transmission de données, soit d'un périphérique de numérisation, soit d'un lecteur de disquettes, de bandes magnétiques ou de supports magnéto-optiques ou optiques, soit par l'utilisation du clavier 18. Ces données sont conservées avec un attribut décrivant leur dernière modification. L'horloge 28 est de type connu, par exemple à pile au lithium. Le fonctionnement automatique est décrit ci-dessous en regard de la figure 2. L'unité centrale 20 est de type connu et est adaptée à réaliser les séquences d'opérations décrites dans les programmes informatiques utilisés.
Le moyen de lecture de données 11 est adapté à lire les données transmises par le micro-ordinateur 5 et à les transmettre au moyen de mémorisation 21. Le moyen de mémorisation 21 est adapté à conserver les données qui lui sont transmises par le moyen de lecture de données 11 et à les transmettre au moyen de reconnaissance de données modifiées 12. Ce moyen de mémorisation permet de n'utiliser que très peu de temps le bus du micro-ordinateur 5 pendant les opérations de sauvegarde, qui nécessitent un temps de traitement et de transfert relativement long. Le moyen de reconnaissance de données modifiées 12 depuis la précédente sauvegarde est adapté à scruter les attributs de chaque fichier qu'il lit dans le moyen de mémorisation 21 et à comparer ces attributs avec ceux correspondant à une modification effectuée depuis la dernière transmission de ce fichier sur le réseau de communication 1 vers le moyen d'archivage 2. Les fichier qui ont été modifiés après la dernière date de transmission de données sont transmis par le moyen de reconnaissance 12 au moyen de détection de virus 13. Le moyen de détection 13 est adapté à détecter tous les virus informatiques qui pourraient se trouver incorporés dans les fichiers transmis par le moyen de reconnaissance 12 et à transmettre les fichiers contaminés au moyen de décontamination 32. Le moyen de décontamination 32 est adapté à éliminer les virus informatiques et leurs effets des fichiers contaminés. Le moyen de détection de virus informatique 13 et le moyen de décontamination 32 sont mis à jour régulièrement par téléchargement afin de tenir compte des derniers virus créés.

Le moyen d'identification d'accès 14 est adapté à identifier le système informatique, à en authentifier l'identité et à accepter ou refuser, en fonction des résultats de ces deux opérations la sauvegarde d'informations. A titre d'exemple, le moyen d'identification 14 vérifie un code dans une mémoire du micro-ordinateur 5 et le modifie après chaque sauvegarde. Le moyen de chiffrement des données 15 est de type connu et adapté à crypter les données transmises au moyen local de transmission 16 par le moyen de reconnaissance 12. Il consiste en un codage selon un algorithme paramétré par le client. Le chiffrement consiste à substituer à un message ou à un ensemble de données que l'on veut protéger un texte inintelligible pour quiconque ne connait pas l'algorithme et les paramètres de chiffrement. Ce chiffrement utilise préférentiellement des modifications mathématiques de codes comportant des permutations, des substitutions et/ou des décalages ou factorisation de très grands nombres.

Le moyen de compression de données 31 est adapté à réduire la dimension des fichiers transmis sans aucune perte d'information. Il est de type connu par l'homme de l'art.

Le moyen local de transmission sur un réseau 16 est de type connu et adapté à entrer en communication avec les moyens de communication du moyen d'archivage 2, tels que décrits en figure 3.

Le moyen de modification d'attribut 29 est adapté à modifier les attributs des fichiers qui ont été sauvegardés de telle manière que ces attributs correspondent à un fichier transmis dans sa dernière version. Ces attributs sont, par le fonctionnement même du système informatique, modifiés à chaque modification du contenu du fichier auquel ils sont liés et l'information de transmission de la dernière version, information utilisée par le moyen de reconnaissance de données modifiées 12, est ainsi éliminée dès modification du dit fichier. Selon les demandes de l'utilisateur, le moyen de modification d'attributs 29 est en ou hors fonctionnement. Par exemple, il peut n'être activé qu'après une sauvegarde intégrale des fichiers contenus dans la mémoire de masse locale 19.

Le moyen d'émission de compte-rendu 33 est adapté à créer dans la mémoire masse locale 19 un fichier indiquant à l'utilisateur du micro-ordinateur 5 :
- le résultat de la sauvegarde;
- le résultat de la détection de virus,
- le résultat de la décontamination,
- la liste des fichiers sauvegardés,
- les heures de début et de fin de sauvegarde,
- le décalage de l'horloge 28 avec le temps universel,

De plus, le moyen d'émission de compte-rendu 33 est adapté à afficher sur le moniteur 17 ces mêmes informations.

Dans la figure 3 sont représentés le réseau de communication 1 et un moyen d'archivage 2 comportant en un premier site un moyen global de transmission sur un réseau 23, un moyen de traitement de données 30, un moyen de numérotation 35, un moyen de déclenchement automatique 36, un moyen d'émission de messages 34, et en un second site un moyen de stockage comportant lui-même dans une chambre forte 22, deux bus de données 24 et 25 et deux mémoires de masse globales 26 et 27.

Le moyen de traitement d'information 30 et les mémoires de masse globales 26 et 27 sont en deux lieux différents.

La chambre forte 22 est de type connu, en particulier dans le domaine bancaire. Elle est adaptée à résister à de nombreuses agressions et est dotée de nombreuses alarmes et de nombreux moyens de surveillance de types connus. En dehors des opérations d'installation, de changement de parties de la mémoire ou de maintenance, aucun opérateur ne pénêtre dans la chambre forte 22. Le moyen global de transmission sur un réseau 23 est de type connu et préférentiellement identique au moyen local de transmission 16. Les deux bus de données 24 et 25 sont reliés au moyen global de transmission de données 23. Ces deux bus sont parallèles et comportent les mêmes périphériques. Les deux mémoires de masse globale 26 et 27 sont adaptées à conserver les données transmises par les deux bus 24 et 25 respectivement. Elles sont de type dit à correction d'erreurs. Le moyen de traitement de données 30 est relié aux deux bus 24 et 25. Il est adapté à comparer les noms des fichiers qui sont mémorisés dans les mémoires de masse globale 26 et 27 et , selon la demande de l'utilisateur, à éliminer certaines des anciennes versions des fichiers qui ont été transmis au cours de la dernière sauvegarde par reconnaissance des attributs de ces fichiers.

Le moyen de numérotation 35 est adapté à réaliser un signal électronique représentatif du numéro d'utilisateur du réseau 1.

Le moyen de déclenchement automatique 36 comporte d'une part une liste des numéros des utilisateurs du dispositif, d'autre part, et pour chaque numéro, un calendrier horaire, journalier, mensuel et annuel de sauvegarde. Il est adapté à émettre au moyen de numérotation 35 un signal représentatif du numéro d'un utilisateur au moment prévu par calendrier de sauvegarde puis à re-émettre ce signal jusqu'à obtention d'une connexion électronique avec le circuit électronique 4 du dit utilisateur.

Le moyen d'émission de messages 34 est adapté d'une part à émettre vers le circuit électronique 4 un message représentatif de la qualité de la sauvegarde réalisée et d'autre part à émettre des messages de défaut à destination de l'utilisateur, si la sauvegarde a été défectueuse, par exemple si le micro-ordinateur 5 n'était pas alimenté électriquement.

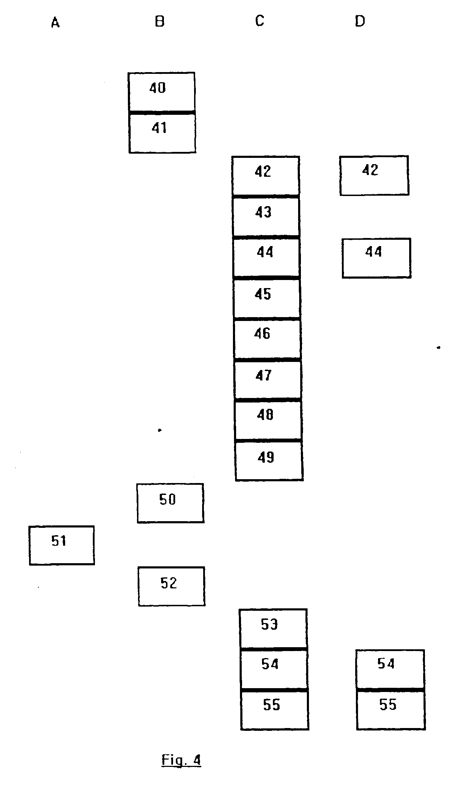

Dans la figure 4 sont représentés sur des colonnes A, B, C et D des opérations réalisées successivement et respectivement dans les mémoires de masse globales 26 et 27, colonne A, dans le moyen de traitement de données 30, colonne B, dans le circuit électronique 4, colonne C, et dans le micro-ordinateur 5, colonne D.

On trouve dans la figure 4 une opération de comparaison de calendrier avec une horloge universelle 40, une opération de commande de numérotation 41, une opération d'accès aux attributs de fichiers 42, une opération de création de table de sauvegarde 43, une opération de rapatriement 44, une opération de détection de virus informatiques 45, une opération de décontamination de fichiers 46, une opération de chiffrement 47, une opération de compression 48, une opération de transmission 49, une opération de traitement 50, une opération d'archivage 51, une émission de signal de réception 52, une opération de création de compte-rendu 53, une opération d'affichage de compte-rendu 54 et une opération de modification d'attributs 55.

L'opération de comparaison de calendrier avec une horloge universelle 40 est réalisée dans le moyen de traitement de données 30. Elle consiste en la scrutation de l'horloge universelle et lorsque celle-ci indique une date prévue pour une sauvegarde en l'émission du numéro du système informatique à sauvegarder vers le moyen de numérotation automatique puis d'un signal de déclenchement de sauvegarde émis vers le circuit électronique 4. L'opération de commande de numérotation 41 déclenche cette numérotation. L'opération d'accès aux attributs de fichiers 42 est réalisée dans le circuit électronique 4 dès réception du dit signal de déclenchement. Elle réalise la lecture des attributs de tous les fichiers présents dans le micro-ordinateur 5. L'opération de création de table de sauvegarde 43 consiste en la détection des attributs de fichiers qui correspondent à un fichier modifié depuis la précédente sauvegarde. Pour chacun de ces fichiers, une copie intégrale est effectuée dans le circuit électronique 4 : c'est l'opération de rapatriement 44. Sur tous les fichiers rapatriés est réalisée l'opération de détection de virus informatiques 45. Dès qu'un virus est détecté, toutes les mémoires de masse et tous les fichiers du système informatique sont décontaminées et une neutralisation du système informatique est réalisée par le dispositif. L'opération de chiffrement 47 consiste en un chiffrement des fichiers décontaminés. L'opération de compression 48 comprime les données chiffrées. L'opération de transmission 49 réalise la transmission des données chiffrées et compressées depuis le circuit électronique 4 vers le moyen de traitement de données 30. L'opération de traitement 50 est réalisée par le moyen de traitement de données 30 et consiste à organiser l'archivage des données transmises en fonction des consignes des utilisateurs. Par exemple, les données transmises sont partitionnées, c'est à dire réparties en fonction des relations entre les utilisateurs. L'opération d'archivage 51 consiste en la mise en mémoire finale des données traitées. Elle peut être réalisée par l'intermédiaire d'un robot ou un automate de gestion de cartouches magnétiques, par exemple, ou par un système de gestion mécanique de multiples disques, plus connu sous le nom anglais de "juke-box". L'émission de signai de réception 52 est réalisée dès que l'archivage est fini et le signal est transmis par le moyen de traitement au circuit électronique 4. L'opération de création de compte-rendu 53 consiste en la réalisation d'un tableau de données présenté plus haut, ces données étant représentatives de la sauvegarde effectuée. L'opération d'affichage de compte-rendu 54 est réalisée par le circuit électronique 4 et consiste par exemple d'une part en la création d'un fichier dans la mémoire de masse locale 19 et d'autre part en l'affichage sur une imprimante ou sur le moniteur 17 de ce tableau de données. Enfin, selon la demande de l'utilisateur, l'opération de modification d'attributs 55 est réalisée par le circuit électronique 4 et réalise la modification des attributs des fichiers qui ont été sauvegardés, les nouveaux attributs étant représentatifs d'une information de non modification depuis la dernière sauvegarde.

Il est à noter que le boîtier 3 est auto-protégé, et peut être portable et adapté à une utilisation itinérante. Son auto-protection comporte au moins un moyen de détection d'ouverture et un moyen de mémorisation de cette ouverture de telle manière qu'à la première sauvegarde survenant après ladite ouverture, l'information d'ouverture est transmise au moyen d'archivage 2. Il est aussi à noter que le micro-ordinateur 5 peut être constitué d'une tablette à écran tactile comportant un logiciel de reconnaissance de caractères manuscrits.

Il est aussi à noter que le circuit électronique 4 et le système informatique auquel il est lié sont alimentés électriquement par une alimentation secourue, c'est à dire possédant une autonomie propre indépendante des variations du réseau électrique. Par exemple, ils sont alimentés à travers un onduleur. De plus, l'ensemble des opérations de sauvegarde est entièrement automatique et préférentiellement nocturne pour des raisons d'indisponibilité et de tarification de transmission.

Selon une première variante, le dispositif est adapté, dès que le moyen de détection de virus informatique 13 détecte la présence d'un virus dans un fichier à ce que le moyen de décontamination décontamine tous les fichiers se trouvant dans le système informatique auquel il est relié.

Selon une seconde variante du dispositif et du procédé objets de la présente invention, le circuit électronique 4 est adapté à remettre à l'heure l'horloge 28 du système informatique auquel il est relié, à chaque fin de sauvegarde de données informatiques.

## Revendications

1. Dispositif de sauvegarde à distance de données numériques organisées en fichiers contenues dans une mémoire de masse locale (19) d'un système informatique (5, 6, 7, 8) caractérisé en ce qu'il comporte, pour chaque site donnant lieu à sauvegarde, un circuit électronique (4) relié au dit système informatique comportant un moyen de lecture de données numériques (11) dans la dite mémoire de masse, un moyen de reconnaissance de fichiers modifiés (12) depuis la précédente sauvegarde adapté à sélectionner les fichiers qui ont été modifiés depuis la précédente sauvegarde, un moyen de détection de virus informatiques (13) adapté à détecter les virus informatiques dans lesdites données, un moyen de chiffrement des données (15), un moyen de compression des données (31) chiffrées et un moyen local de transmission (16) des données chiffrées et compressées sur un réseau numérique à intégration de services (1) et en ce qu'il comporte, relié audit réseau, un moyen de traitement de données (30) transmises associé à des mémoires de masse globales (26, 27) conservant les données transmises et à un moyen de numérotation automatique (35), ledit moyen de traitement de données commandant le fonctionnement du moyen de numérotation automatique, le fonctionnement du circuit électronique et le fonctionnement des mémoires de masse globales (26, 27).

2. Dispositif selon la revendication 1 caractérisé en ce qu'il comporte en outre dans le circuit électronique un moyen d'identification (14) du système informatique adapté à vérifier que le système informatique auquel est relié le circuit électronique est identique à celui utilisé au cours de la précédente sauvegarde.

3. Dispositif selon l'une des revendications 1 ou 2 caractérisé en ce que le moyen de traitement de données (30) est adapté à déclencher automatiquement le fonctionnement du moyen de numérotation automatique, le fonctionnement du circuit électronique et le fonctionnement des mémoires de masse globales (26, 27) en fonction d'un calendrier de sauvegarde.

4. Dispositif selon l'une quelconque des revendications précédentes caractérisé en ce que le circuit électronique comporte en outre un moyen de décontamination (32) des fichiers à sauvegarder.

5. Dispositif selon l'une quelconque des revendications précédentes caractérisé en ce que le circuit électronique est incorporé dans un boîtier (3, 9, 10) comportant en outre un moyen de détection d'ouverture.

6. Dispositif selon l'une quelconque des revendications précédentes caractérisé en ce que le moyen de traitement de données (30) et les mémoires de masse globales (26, 27) sont en deux lieux différents.

7. Dispositif selon l'une quelconque des revendications précédentes caractérisé en ce que le circuit électronique comporte en outre un moyen de mémorisation (21) adapté à conserver toutes les données à sauvegarder.

8. Procédé de sauvegarde à distance de données numériques organisées en fichiers contenus dans une mémoire de masse locale d'un système informatique relié à un réseau numérique à intégration de services caractérisé en ce qu'il réalise automatiquement une numérotation sur ledit réseau, une lecture de données numériques dans la dite mémoire de masse, une reconnaissance de fichiers modifiés depuis la précédente sauvegarde adaptée à sélectionner les fichiers qui ont été modifiés depuis la précédente sauvegarde, une détection de virus informatiques adaptée à détecter les virus informatiques dans lesdites données, un chiffrement des données, une compression des données chiffrées, une transmission des données chiffrées et comprimées sur un réseau numérique à intégration de services, un traitement des données transmises, un archivage des données transmises.

9. Procédé selon la revendication 8 caractérisé en ce qu'il réalise, en outre, le partitionnement des données avant leur archivage.

10. Procédé selon l'une des revendications 8 ou 9 caractérisé en ce qu'il réalise une installation dans la mémoire de masse locale (19) du système informatique (5, 6, 7, 8) d'un fichier comportant des données représentatives du déroulement du dit procédé.

## Patentansprüche

1. Fernsicherungsvorrichtung für in Dateien organisierte numerische Daten, die in einem lokalen Massenspeicher (19) eines Informatiksystems (5, 6, 7, 8) enthalten sind, dadurch gekennzeichnet, daß sie für jeden Ort, der eine Sicherung veranlaßt, eine Elektronikschaltung (4) aufweist, die mit dem Informatiksystem verbunden ist und ein Mittel (11) zum Lesen von numerischen Daten aus dem Massenspeicher, ein Mittel (12) zum Erkennen von seit der letzten Sicherung modifizierten numerischen Dateien, das dazu geeignet ist, die Dateien auszuwählen, die seit der vorhergehenden Sicherung modifiziert wurden, ein Mittel (13) zum Erfassen von Informatikviren, das zum Erfassen der Informatikviren in den Daten geeignet ist, ein Mittel (15) zum Chiffrieren der Daten, ein Mittel (31) zur Kompression der chiffrierten Daten sowie ein lokales Mittel (16) zum Übertragen der chiffrierten und komprimierten Daten auf einem digitalen dienstintegrierten Netz (1) aufweist, und daß sie ferner ein Mittel (30) zur Verarbeitung der übertragenen Daten aufweist, das globalen Massenspeichern, die die übertragenen Daten aufbewahren sowie einem automatischen Numerierungsmittel (35) zugeordnet ist, wobei das Datenverarbeitungsmittel den Betrieb des automatischen Numerierungsmittels, den Betrieb der elektronischen Schaltung und den Betrieb der globalen Massenspeicher (26, 27) steuert.

2. Vorrichtung nach Anspruch 1, dadurch gekennzeichnet, daß die ferner in der elektronischen Schaltung ein Mittel (14) zur Identifizierung des Informatiksystems aufweist, das überprüfen kann, ob das Informatiksystem, mit dem die elektronische Schaltung verbunden ist, mit demjenigen identisch ist, das im Verlauf der vorhergehenden Sicherung verwendet wurde.

3. Vorrichtung nach einem der Ansprüche 1 oder 2, dadurch gekennzeichnet, daß das Datenverarbeitungsmittel (30) automatisch den Betrieb des automatischen Numerierungsmittels, den Betrieb der elektronischen Schaltung und den Betrieb der globalen Massenspeicher (26, 27) in Abhängigkeit von einem Sicherungskalender auslösen kann.

4. Vorrichtung nach einem der vorhergehenden Ansprüche, dadurch gekennzeichnet, daß die elektronische Schaltung ferner ein Mittel (32) zur Dekontaminierung der zu sichernden Dateien aufweist.

5. Vorrichtung nach einem der vorhergehenden Ansprüche, dadurch gekennzeichnet, daß die elektronische Schaltung in einem Gehäuse (3, 9, 10) aufgenommen ist, das ferner ein Mittel zur Öffnungerfassung aufweist.

6. Vorrichtung nach einem der vorhergehenden Ansprüche, dadurch gekennzeichnet, daß das Datenverarbeitungsmittel (10) und die globalen Massenspeicher (26, 27) an zwei verschiedenen Orten sind.

7. Vorrichtung nach einem der vorhergehenden Ansprüche, dadurch gekennzeichnet, daß die elektronische Schaltung ferner ein Speichermittel (21) aufweist, das alle zu sichernden Daten aufbewahren kann.

8. Verfahren zur Fernsicherung von in Dateien organisierten numerischen Daten, die in einem lokalen Massenspeicher eines Informatiksystems enthalten sind, das mit einem digitalen dienstintegtierten Netz verbunden ist, dadurch gekennzeichnet, daß es automatisch eine Numerierung auf dem Netz, ein Lesen von numerischen Daten aus dem Massenspeicher, eine Erkennung der seit der letzten Sicherung modifizierten Dateien, wodurch die Dateien ausgewählt werden können, die seit der vorhergehenden Sicherung modifiziert wurden, eine Erfassung von Informatikviren, die zum Erfassen der Informatikviren in den Daten geeignet ist, eine Chiffrierung der Daten, eine Kompression der chiffrierten Daten, eine Übertragung der chiffrierten und komprimierten Daten auf einem digitalen dienstintegrierten Netz, eine Verarbeitung der übertragenen Daten sowie eine Archivierung der übertragenen Daten durchführen kann.

9. Verfahren nach Anspruch 8, dadurch gekennzeichnet, daß es ferner die Aufteilung der Daten vor ihrer Archivierung durchführt.

10. Verfahren nach einem der Ansprüche 8 oder 9, dadurch gekennzeichnet, daß es eine Installation einer Datei mit Daten, die für den Ablauf des Verfahrens repräsentativ sind, in dem lokalen Massenspeicher (19) des Informatiksystems (5, 6, 7, 8) durchführt.

## Claims

1. Remote back-up device for digital data organised in files contained in a local bulk memory (19) of a computer system (5, 6, 7, 8), characterised in that it comprises, for each site for which back-up is required, an electronic circuit (4) connected to said computer system comprising a means for reading digital data (11) from said bulk memory, a means for recognising files (12) modified since the previous back-up adapted to select the files that have been modified since the previous back-up, a computer virus detection means (13) adapted to detect computer viruses in said data, a means for encrypting data (15), a means for compressing encrypted data (31) and a local means (16) for transmitting encrypted and compressed data over an integrated services digital network (1) and in that it comprises, connected to said network, a means for processing transmitted data (30) associated with global bulk memories (26, 27) preserving the transmitted data and with an automatic numbering means (35), said data processing means controlling the operation of the automatic numbering means, the operation of the electronic circuit and the operation of the global bulk memories (26, 27).

2. Device according to Claim 1 characterised in that it further comprises, in the electronic circuit, a means (14) for identifying the computer system adapted to verify that the computer system to which the electronic circuit is connected is identical to that used during the previous back-up.

3. Device according to one of Claims 1 or 2 characterised in that the data processing means (30) is adapted to activate automatically the operation of the automatic numbering means, the operation of the electronic circuit and the operation of the global bulk memories (26, 27) as a function of a back-up timetable.

4. Device according to any one of the preceding claims, characterised in that the electronic circuit further comprises a means (32) for decontaminating the files to be backed up.

5. Device according to any one of the preceding claims, characterised in that the electronic circuit is incorporated into a housing (3, 9, 10) further comprising a means for detecting whether it has been opened.

6. Device according to any one of the preceding claims, characterised in that the data processing means (30) and the global bulk memories (26, 27) are in two different locations.

7. Device according to any one of the preceding claims, characterised in that the electronic circuit further comprises a storage means (21) adapted to preserve all the data to be backed up.

8. Remote method for backing up digital data organised in files contained in a local bulk memory of a computer system connected to an integrated services digital network, characterised in that it automatically performs a numbering on said network, a reading of digital data from said bulk memory, a recognition of files modified since the previous back-up adapted to select the files that have been modified since the previous back-up, a computer virus detection adapted to detect the computer viruses in said data, an encryption of data, a compression of the encrypted data, a transmission of the encrypted and compressed data over an integrated services digital network, a processing of the transmitted data, an archiving of the transmitted data.

9. Method according to Claim 8 characterised in that it further performs the partitioning of data before its archiving.

10. Method according to one of Claims 8 or 9 characterised in that it performs an installation in the local bulk memory (19) of the computer system (5, 6, 7, 8) of a file comprising data representative of the progress of said method.
